# EUROPEAN PATENT APPLICATION

(11) **EP 4 578 712 A1**
(43) Date of publication of application: **02.07.2025**
(21) Application number: 23220263.0
(22) Date of filing: 27.12.2023
(51) Int. Cl.: B60L 53/14, B60L 53/16, B60L 53/30, H02G 3/04, H02J 7/00, B60L 53/35, H01R 25/14

(54) **MODULAR CHARGING ARRANGEMENT AND METHOD OF MOUNTING A MODULAR CHARGING ARRANGEMENT**

(71) Applicant: AmpSociety International AB, 431 53 Mölndal (SE)
(72) Inventor: SANDAHL, Kristian, 431 53 Mölndal (SE); FRIES, Henrik, 431 53 Mölndal (SE); LINDAHL, Martin, 431 53 Mölndal (SE); SÖDERSTRÖM OLSSON, Rasmus, 431 53 Mölndal (SE)
(74) Representative: Lind Edlund Kenamets Intellectual Property AB

(57) **Abstract**

A modular charging arrangement (100) for charging a vehicle is provided. The modular charging arrangement (100) comprises a first and a second elongated rail (110a, 110b) having first and second rail connectors (111, 112) facing in a common direction, a mounting bracket (120) configured to be attached to an object, such as a post (200) or a wall, the mounting bracket (120) comprising a mounting surface (122) configured to secure the first rail connector (111) and the second rail connector (112) at a connection distance (D) from each other such that the first rail connector (111) and the second rail connector (112) faces away from the mounting surface (122) in a common connection direction (CCD), and a connection element (130) comprising a power outlet (133) and a first and a second connection element connector (131, 132) arranged at the connection distance (D) from each other such that the first connection element connector (131) engages the first rail connector (111) of the first elongated rail (110a) and the second connection element connector (132) engages the second rail connector (112) of the second elongated rail (110b) when the connection element (130) is translated towards the mounting surface (122) of the mounting bracket (120) in a direction opposite to the common connection direction (CCD). A method (700) of mounting a modular charging arrangement (100) for charging a vehicle is also provided.

## Description

### Field of the invention

The present invention relates to modular charging arrangement for charging a vehicle. The invention also relates to a method of mounting a modular charging arrangement.

### Background of the invention

The use of multi-outlet charge stations for electric vehicles (EVs) represents a significant advancement in the field of electric vehicle charging infrastructure. With the growing adoption of EVs worldwide, the need for efficient, scalable, and accessible charging solutions has become paramount. Multi-outlet charge stations address these requirements by providing a centralized and convenient platform for recharging a plurality of EVs simultaneously.

Multi-outlet charge stations typically have multiple charging outlets, potentially equipped with fast-changing technology and energy management to reduce the strain on local power grids. Further, multi-outlet charge stations are generally strategically located at key points, such as along highways, in urban centers, at commercial facilities or at residential areas, enhancing the practicality of EV ownership by ensuring that charging infrastructure is readily available where it is needed most.

Multi-outlet charge stations come in various physical layouts, each designed to meet specific needs and conditions. One common layout for multi-outlet charge stations is a linear layout where charging outlets are arranged in a straight line or in a plurality of straight lines. In this regard, one or a handful of charging outlets are typically arranged on a post or a pillar and connected via cables which are buried in the ground.

In order to reduce overall building costs and excavation efforts when putting up multi-outlet charge stations, it has been proposed to put together the charging outlets via overground elements used for protecting and holding the cables connecting the charging outlets as well as holding the charge outlets. When using such overground elements, the overground elements are commonly arranged above the ground on posts, pillars, columns or similar which are fixed to, driven into, or partially buried into the ground. For natural reasons, such posts must be accurately located or else the overground elements will simply not fit. This brings about that it is time consuming and labor intensive to put up posts accurately enough. Another problem with putting up posts for multi-outlet charge stations utilizing overground elements resides in that it may be very difficult or even impossible to put up a post in an exact location. For instance, a rock or stone may be buried in a location where it is desired to put up a post.

Hence, there is room for improvement when it comes to multi-outlet charge stations for EVs.

### Summary

With the above in mind, it is an object of the present invention to provide an improved modular charging arrangement for charging a vehicle as well as a method of mounting a modular charging arrangement for charging a vehicle.

Another object of the present invention is to provide a modular charging arrangement as well as a method of mounting a modular charging arrangement which solves or at least alleviates the above drawbacks of the prior art.

Another object is to provide a modular charging arrangement which is easy to mount.

Another object is to provide a modular charging arrangement which is easy to build.

Another object is to provide a provide a modular charging arrangement which may be mounted in less time than prior art charging arrangements.

Another object is to provide a modular charging arrangement which is less labor-intensive to mount and to build.

Another object is to provide a modular charging arrangement which is more cost-efficient.

To achieve at least one of the above objects and also other objects that will be evident from the following description, modular charging arrangement for charging a vehicle having the features defined in claim 1 is provided according to the present inventive concept. A method of mounting a modular charging arrangement for charging a vehicle is provided according to claim 16. Preferred variations of the inventive concept will be evident from the dependent claims.

More specifically, according to a first aspect, there is provided a modular charging arrangement for charging a vehicle, the charging arrangement comprising:
a first and a second elongated rail each comprising a first and a second rail connector electrically connected via at least one conductor, wherein the first rail connector is provided at a first end portion of the elongated rail and the second rail connector is provided at a second end portion of the elongated rail, wherein the first and the second rail connectors are facing in a common direction being perpendicular to a longitudinal direction of the elongated rail,
a mounting bracket configured to be attached to an object, such as a post or a wall, the mounting bracket comprising a mounting surface configured to secure the first rail connector of the first elongated rail and to secure the second rail connector of the second elongated rail such that the first rail connector of the first elongated rail and the second rail connector of the second elongated rail are arranged at a connection distance from each other and faces away from the mounting surface in a common connection direction,
a connection element comprising a power outlet configured to be connected to a vehicle to be charged, and a first and a second connection element connector electrically connected to the power outlet, wherein the first connection element connector and the second connection element connector are arranged at the connection distance from each other and faces in a common direction, such that the first connection element connector engages the first rail connector of the first elongated rail and the second connection element connector engages the second rail connector of the second elongated rail when the connection element is translated towards the mounting surface of the mounting bracket in a direction opposite to the common connection direction.

Hereby an improved modular charging arrangement for charging a vehicle is provided.

The modular charging arrangement is designed to be easy to mount and easy to build and to be flexible. The modular charging arrangement is designed to be expandable by adding more elongated rails, mounting brackets and connection elements. The modular charging arrangement is designed to be flexible by utilizing a desired number of elongated rails or beams, mounting brackets and connection elements. Hence, the size and layout of the modular charging arrangement may easily be adapted to suit different needs.

The present invention is based on the idea that that rail connectors that are to be engaged by connection element connectors of a connection element may be secured at a certain distance at the mounting bracket. In this way, mounting brackets used in the modular changing arrangement must not be arranged at an exact distance but rather with a relatively speaking large tolerance such that the rail connectors that are to be engaged by connection element connectors of a connection element may be adjusted to and secured at the connection distance, i.e., to the distance between the connection element connectors of the connection element at hand.

By each elongated rail comprising a first and a second rail connector facing in a common direction being perpendicular to a longitudinal direction of the elongated rail, the first and second rail connectors may be engaged by a respective connection element connector from a common direction. In other words, a respective connection element may be connected to each end of each elongated rail from a common direction.

By the mounting bracket comprising a mounting surface configured to secure rail connectors of two elongated rails such that a respective rail connector of the elongated rails is arranged at a connection distance from each other and faces away from the mounting surface in a common connection direction, the rail connectors may be engaged by a respective connection element connector of a connection element by pushing the connection element in place. In other words, a connection element may connect two elongated rails fixed to a mounting bracket.

Further, by the first and the second rail connector facing in a common direction being perpendicular to a longitudinal direction of the elongated rail, the connection element may be decoupled or removed from its associated elongated rails by being translated away form the elongated rails in a direction perpendicular to the elongated rails. This allows for that the connection element may be replaced or removed without removing or moving any other parts of the system, such as adjacent elongated rails. In this way, the connection element may be upgraded without affecting other parts of the system.

Hence, the modular charging arrangement provides for a solution where a desired or arbitrary number of elongated bars and connection elements may be connected after each other in a modular fashion to form a modular charging arrangement, by being secured to mounting brackets. In this regard, it is worth stressing once more that the mounting brackets may be mounted with a relatively speaking large tolerance while still being able to mount the modular charging arrangement to satisfaction.

The connection distance may vary depending on the length of the connection element.

A modular charging arrangement may include a plurality of connection distances and hence a plurality of connection elements where the associated connection element connectors are arranged at the different connection distances.

The first end portion of the first elongated rail may be slidable along the mounting surface and/or the second end portion of the second elongated rail may be slidable along the mounting surface such that the connection distance is obtainable by translating the first end portion of the first elongated rail along the mounting surface and/or by translating the second end portion of the second elongated rail along the mounting surface, which is advantageous in that the connection distance may be obtained while the first end portion of the first elongated rail and/or the second end portion of the second elongated rail is/are supported by the mounting surface. Hence, the first and the second elongated rails and their respective rail connectors may consequently by placed on the mounting brackets and slid to desired locations without having to be carried or otherwise supported while being moved or adjusted to the desired locations.

The first rail connector of the first elongated rail may be slidable in relation to the first elongated rail along the longitudinal direction of the first elongated rail and/or the second rail connector of the second elongated rail may be slidable in relation to the second elongated rail along the longitudinal direction of the second elongated rail, which is advantageous in that the rail connectors may be slid along their respective elongated rails such that the connection distance is obtainable. Hence, not only the locations of the elongated rails on the mounting surface may be adjusted to obtain the connection distance, but also the locations of the rail connectors in relation to the elongated rails. In other words, the locations of end portions of two elongated rails may meet the mounting surface with a relatively speaking large tolerance since the locations of the rail connectors may be slid along the longitudinal direction of the respective rails to obtain the connection distance therebetween.

The first rail connector of the first elongated rail may be slidable in relation to the first elongated rail along the longitudinal direction of the first elongated rail and the second rail connector of the first elongated rail may be slidable in relation to the first elongated rail along the longitudinal direction of the first elongated rail. Hence, both the first and the second rail connector of the first elongated rail may be slidable in relation to the first elongated rail along the longitudinal direction of the first elongated rail.

The first rail connector of the second elongated rail may be slidable in relation to the second elongated rail along the longitudinal direction of the second elongated rail and the second rail connector of the second elongated rail may be slidable in relation to the second elongated rail along the longitudinal direction of the second elongated rail. Hence, both the first and the second rail connector of the second elongated rail may be slidable in relation to the second elongated rail along the longitudinal direction of the second elongated rail.

The first rail connector of the first elongated rail may comprises a locking member configured to cooperate with a locking feature of the mounting surface and/or the second rail connector of the second elongated rail may comprises a locking member configured to cooperate with a locking feature of the mounting surface, which is advantageous in that the positions of the rail connectors may be secured or locked in relation to the mounting surface of the mounting bracket.

The mounting surface may be provided with a connection configuration for a mortise and tenon type joint comprising a slot of mortise type and/or a projection of tenon type, wherein the slot and/or projection has a straight extension along the mounting surface, which is advantageous in that the first and second elongated rails may be slid into position along the mounting surface along the straight extension of the connection configuration. Hence, the first and second elongated rails may be guided along the mounting surface in a certain direction, i.e., along the straight extension of the connection configuration. Further by letting the slot and/or projection have a straight extension along the mounting surface, extrusion of the first and second elongated rails may be enabled or at least facilitated which is advantageous in that the first and second elongated rails may be formed in an efficient and yet simple manner.

It should be noted that within the context of this application the term "connection configuration for a mortise and tenon type joint" may be any type of pattern or structure capable of being included in a joint of mortise and tenon type. The connection configuration may be external to and hence protrude from the mounting surface. The connection configuration may be internal of and hence not protrude from the mounting surface. The connection configuration may form part of or form the complete mounting surface. It should be noted that within the context of this application the term "mortise and tenon type joint" may be any type of joint including any type of mortise and any type tenon interacting with each other. The mortise and tenon may interact partially or completely with each other. The mortise and tenon may interact with each other while exhibiting a tight fit. The mortise and tenon may interact while exhibiting a loose fit. The connection configuration may be configured to form a sliding type mortise and tenon type joint.

The mortise and tenon type joint which may be formed by the connection configuration may be a dovetail joint. Hence, the connection configuration may include a least one so-called pin and/or at least one so-called tail configured to form a dovetail joint. The connection configuration may include a plurality of so-called pins and/or a plurality of so-called tails configured to form a dovetail joint. The connection configuration may include a plurality of so-called pins and/or a plurality of so-called tails configured to form a plurality of dovetail joints.

A surface of the first end portion of the first elongated rail may comprises a rail connection configuration which is at least partially complementary to the connection configuration of the mounting surface and/or a surface of the second end portion of the second elongated rail may comprise the rail connection configuration, which is advantageous in that the first end portion of the first elongated rail and/or the second end portion of the second elongated rail may be secured to the mounting surface in a reliable, strong and yet simple manner. The fact that the rail connection configuration may be complementary to the connection configuration of the mounting surface brings about that a tight fit or a fit with a limited slack may be achieved. It should be noted that within the context of this application the term "complementary to" may refer to any rail connection configuration which is complementary to at least a portion of the connection configuration of the mounting surface. It should further be noted that within the context of this application the term "complementary to" may refer to any connection configuration of the mounting surface which is complementary to at least a portion of the rail connection configuration.

The first and/or the second elongated rail may comprise a hollow main body housing the at least one conductor and holding the first and the second rail connector, wherein the hollow main body is formed in a single piece, which is advantageous in that the first and/or the second elongated rails may be formed in an efficient and simple manner. Hene, the main body of the first and/or the second elongated rails may be formed in one piece where no lids, further parts or openings along their respective longitudinal directions are required. The at least one conductor may consequently be inserted into the interior of the hollow main body via an opening or openings at the short ends thereof. In this way, the first and/or the second elongated rails may be formed at a reduced cost as compared to when a lid or similar is needed to be able to insert e.g., conductors into the first and the second elongated rails. By the first and/or the second elongated rail comprising a hollow main body housing the at least one conductor and holding the first and the second rail connector, wherein the hollow main body is formed in a single piece, a strong, weatherproof and easily mountable elongated rail may be achieved, hence, providing for that a strong, weatherproof and easily mountable modular charging arrangement may be achieved.

The hollow main body of the first and the second elongated rail may be formed in an extrusion process.

The hollow main body of the first and the second elongated rail may be extruded from aluminum.

The first and the second elongated rail may each comprise a hollow main body housing the at least one conductor and holding the first and the second rail connector, wherein the hollow main body is formed in a single piece.

Each rail connector may have a symmetric design with respect to a central plane thereof being parallel to the longitudinal direction of the elongated rail and parallel to the common direction in which the rail connector faces, which is advantageous in that each rail connector may receive and engage a connection element connector of a connection element, where the connection element may be orientated in two different orientations while still establishing an electrical connection therebetween. Hence, the connection element may be rotated 180 degrees and still connected to its associated elongated rails. In this regard, it shall be noted that the overall design of the rail connector may be symmetric with respect to the central plane thereof being parallel to the longitudinal direction of the elongated rail and parallel to the common direction in which the rail connector faces such that the connection element may be rotated 180 degrees and still connected to its associated elongated rails. However, the configuration of the individual connectors of the rail connector must not be symmetric with respect to the central plane thereof being parallel to the longitudinal direction of the elongated rail and parallel to the common direction in which the rail connector faces.

Each rail connector may have a design which may receive and engage a connection element connector of a connection element, where the connection element is orientated in two different orientations while still establishing an electrical connection therebetween. To this end, the rail connector as such need not have a symmetric design although this may be preferred from e.g. a manufacturing perspective.

Each connection element connector may have a symmetric design with respect to a central plane thereof being parallel to a longitudinal direction of the connection element and parallel to the common direction in which the connection element connector faces, which is advantageous in that each connection element connector may receive and engage a rail connector while the connection element may be orientated in two different orientations while still establishing an electrical connection therebetween. Hence, the connection element may be translated towards the mounting surface such that the connection element connectors engage the first rail connector of the first elongated rail and the second rail connector of the second elongated rail while being orientated in two different orientations. In other words, the connection element may be translated towards the mounting surface such that the connection element connectors engages the first rail connector of the first elongated rail and the second rail connector of the second elongated rail in a first orientation and in a second orientation where the connection element has been rotated 180 degrees such that the left end portion prior to the rotation becomes the right end portion after the rotation. A further advantage resides in that the final location of the power outlet may be altered by rotating the connection element. For instance, the location of the power outlet may be chosen to e.g., face a certain parking lot or to face away from the parking lot by rotating the connection element 180 degrees as have been explained above.

Each connection element connector may have a design which may receive and engage a rail connector of a respective elongated rail, where the connection element is orientated in two different orientations while still establishing an electrical connection therebetween. To this end, the connection element connectors as such need not have a symmetric design although this may be preferred from e.g. a manufacturing perspective.

The first and the second connection element connectors may have a design and a respective orientation allowing for that the connection element may be orientated in two different orientations. Thus, the first and the second connection element connectors may have a design and a respective orientation allowing for that each connection element connector may receive and engage a rail connector while the connection element may be orientated in two different orientations while still establishing an electrical connection therebetween.

The rail connector and the connection element connector may comprise a power contact configuration configured to provide power to the power outlet, which is advantageous in that a portion or part of the rail connector and a portion of the connection element connector may be used to provide power to the power outlet.

The rail connector and the connection element connector may comprise a data contact configuration configured to provide data to a control unit arranged in the connection element and configured to control an amount of power transmitted to the power outlet, which is advantageous in that a portion or part of the rail connector and a portion of the connection element connector may be used to provide data to a control unit. Such control unit may to advantage be arranged in the connection element and configured to control an amount of power transmitted to the power outlet. Hence, the rail connector and the connection element connector may be used to provide power to the power outlet but also for other purposes. In other words, a singe connector, like the rail connector and the connection element connector may serve a dual purpose of providing power and data in the same connector.

The power outlet may comprise a first power outlet arranged at a first side of the connection element and a second power outlet arranged at a second opposite side of the connection element, which is advantageous in that power outlets may be provided at different sides of the modular charging arrangement. In other words, power outlets may be provided at opposite sides of the connection element and hence on opposite sides of the modular charging arrangement. For instance, a first power outlet may face a first parking lot on a first side of the modular charging arrangement while a second power outlet may face a second parking lot on a second opposite side of the modular charging arrangement. Hence, a flexible modular charging arrangement may be provided.

More than one power outlet may be arranged at the first side of the connection element and more than one power outlet may arranged at the second opposite side of the connection element. Hence, the flexibility of the modular charging arrangement may be further improved.

The modular charging arrangement may further comprise a power module, configured to be connected to the second rail connector of the first elongated rail or to the first rail connector of the second elongated rail such that power is provided to the power outlet, which is advantageous in that power may be provided to the power outlet via the first elongated rail or via the second elongated rail. Hence, power may be provided to the power outlet from different directions, sides or ends of the modular charging arrangement. More specifically, power may be provided from the power module via the second rail connector of the first elongated rail, i.e., from an end or side of the modular charging arrangement, or via the first rail connector of the second elongated rail i.e., from a second opposite end or side of the modular charging arrangement.

The modular charging arrangement may further comprise an end connection element comprising a further connection element connector connected to the power module, wherein the further connection element connector is configured to engage the second rail connector of the first elongated rail or to engage the first rail connector of the second elongated rail such that power is provided to the power outlet, which is advantageous in that power may be provided to the power outlet from the power module via a first end of the modular charging arrangement or via a second opposite end of the modular charging arrangement, in simple manner via the end connection element. Hence, the power module may be connected to the modular charging arrangement at any end thereof by simply connecting the end connection element to the modular charging arrangement such that the further connection element connector engages the second rail connector of the first elongated rail or such that the further connection element connector engages the first rail connector of the second elongated rail.

The power module may comprise a central control unit configured to distribute power between power outlets of the modular charging arrangement.

The central control unit may be configured to communicate with the control unit of the connection element such that the control unit of the connection element provides a desired amount of power to the power outlet thereof.

The central control unit may be configured to communicate with a respective control unit of a plurality of connection elements such that power is distributed between the plurality of connection elements. In this way, the power available to the modular charging arrangement may be distributed between the power outlets of the modular charging arrangement in a desired manner.

The central control unit may be configured to communicate with a remote server and/or with the internet. In this way, the central control unit may for instance provide power to the power outlets at times when electricity prices are favorable. Further, in this way, the central control unit may report incidents of the modular charging arrangement. Such incidents may for instance include a malfunction of a component or a module, a tamper action or mechanical damage.

The modular charging arrangement may further comprise a blind connection element comprising a first and a second blind connection element connector electrically connected via at least one conductor, wherein the first blind connection element connector and the second blind connection element connector are arranged at the connection distance from each other and faces in a common direction, and wherein the first blind connection element connector is a connection element connector and the second blind connection element connector is a connection element connector, which is advantageous in that two elongated rails may be connected to each via the blind connection element by securing an end portion of each elongated rail at the mounting surface of a mounting bracket such that the relevant rail connectors are arranged at the connection distance from each other. Hence, the two elongated rails may, when secured to the mounting surface, be connected to each via the blind connection element by translating the blind connection element towards the mounting surface such that the first blind connection element connector engages a relevant rail connectors and the second blind connection element connector engages the other relevant rail connector.

Further, the blind connection element may be replaced or removed without removing or moving any other parts of the system, such as adjacent elongated rails. In this way, the blind connection element may be replaced by a connection element without affecting other parts of the system. Hence, more power outlets may be added to the modular charging arrangement by replacing a blind connection element with a connection element.

The modular charging arrangement may comprise a plurality of elongated rails, a plurality of mounting brackets and a plurality of connection elements, which is advantageous in that the size or extension of the modular charging arrangement may be adapted to suit different needs. Further the number of power outlets may also be adapted by including a plurality of connection elements in the modular charging arrangement.

According to another aspect of the invention, there is provided a method of mounting a modular charging arrangement for charging a vehicle, the method comprising:
providing a first and a second elongated rail each comprising a first and a second rail connector connected via at least one conductor, wherein the first rail connector is provided at a first end portion of the elongated rail and the second rail connector is provided at a second end portion of the elongated rail, wherein the first and the second rail connectors are facing in a common direction being perpendicular to a longitudinal direction of the elongated rail,
providing a mounting bracket comprising a mounting surface,
providing a connection element comprising a power outlet configured to be connected to a vehicle to be charged, and a first and a second connection element connector electrically connected to the power outlet, wherein the first connection element connector and the second connection element connector are arranged at a connection distance from each other and faces in a common direction,
attaching the mounting bracket to an object, such as a post or a wall,
securing the first rail connector of the first elongated rail and the second rail connector of the second elongated rail at the mounting surface such that the first rail connector of the first elongated rail and the second rail connector of the second elongated rail are arranged at the connection distance from each other and faces away from the mounting surface in a common connection direction,
translating the connection element towards the mounting surface of the mounting bracket in a direction opposite to the common connection direction, such that the first connection element connector engages the first rail connector of the first elongated rail and the second connection element connector engages the second rail connector of the second elongated rail.

In general, features of this aspect of the invention provide similar advantages as discussed above in relation to the previous aspect of the invention. Consequently, said advantages will not be repeated in order to avoid undue repetition. Hence, the details and advantages of this aspect of the invention are largely analogous to those of the first aspect of the invention, wherein reference is made to the above.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief description of the drawings

The above, as well as additional objects, features and advantages of the present inventive concept, will be better understood through the following illustrative and non-limiting detailed description of preferred variants of the present inventive concept, with reference to the appended drawings, where the same reference numerals will be used for similar elements, wherein:
Fig. 1 conceptually illustrates a modular charging arrangement.
Figs. 2 and 3 conceptually illustrates how a connection element may be connected to a pair of elongated rails.
Fig. 4 conceptually illustrates a connection element.
Figs. 5 and 6 conceptually illustrates a connection element connected to a pair of elongated rails.
Figs. 7a and 7b conceptually illustrates an end portion of an elongated rail.
Figs. 8a and 8b conceptually illustrates contact configurations used in the modular charging arrangement.
Fig. 9 conceptually illustrates an end connection element used in the modular charging arrangement.
Fig. 10 conceptually illustrates a modular charging arrangement of a different layout as compared to modular charging arrangement of Fig. 1.
Fig. 11 conceptually illustrates an end element used in the modular charging arrangement.
Fig. 12 conceptually illustrates a flow chart of a method of mounting a modular charging arrangement.

### Detailed description

The present inventive concept will now be described more fully hereinafter with reference to the accompanying drawings, in which preferred variants of the inventive concept are shown. This inventive concept may, however, be embodied in many different forms and should not be construed as limited to the variants set forth herein; rather, these variants are provided for thoroughness and completeness, and fully convey the scope of the inventive concept to the skilled person. Like reference numerals refer to like elements throughout the description.

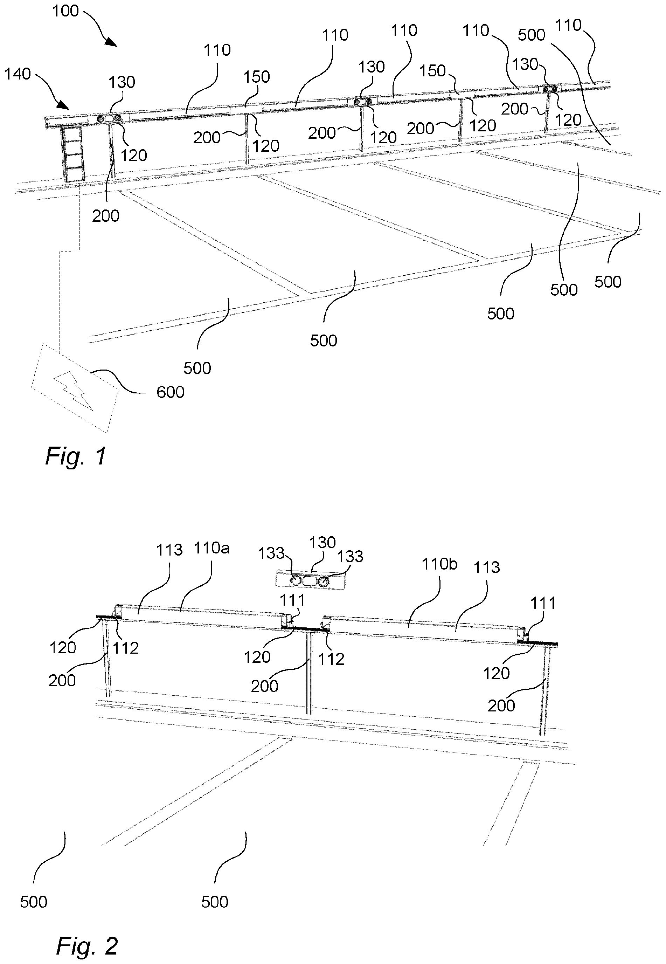

Initially, a modular charging arrangement 100 for charging a vehicle will be briefly described with reference to Fig. 1. As illustrated in Fig. 1 the modular charging arrangement 100 may be provided along a plurality of parking lots 500, where each parking lot 500 is configured to accommodate a vehicle being charged by means of the modular charging arrangement 100. In Fig. 1, it is schematically illustrated how the modular charging arrangement 100 is provided to a plurality of parking lots 500 of which six are visible in Fig. 1. Hower, it is to be understood that the modular charging arrangement 100 may be provided to serve more than six parking lots 500 or less than six parking lots 500. In practice, the modular charging arrangement 100 may be provided to serve any number of parking lots 500. For instance, the modular charging arrangement 100 may be provided to serve any number of parking lots 500 up to 54 parking lots 500. For instance, the modular charging arrangement 100 may be provided to serve any number of parking lots 500 up to 100 parking lots 500. In this regard, it is to be noted that any number of parking lots 500 may be served in practice since the power available to the modular charging arrangement may be distributed among the parking lots 500. However, if a large number of vehicles are to be charged by the modular charging arrangement 100, it may become critical that the vehicles are parked long enough such that there is sufficient time to charge the vehicles given the available power. Thus, if the modular charging arrangement 100 is to be installed at a large parking typically having more than 54 parking lots 500, the modular parking arrangement may be connected to the power grid at more than one instance such that the available power is increased, by e.g. being doubled, tripled or else multiplied. To this end, more than one power module may be used as will be described in greater detail hereinafter.

The modular charging arrangement 100 of Fig. 1 is formed by a limited number of elements, modules or components which have been assembled so as to form the modular charging arrangement 100. The depicted modular charging arrangement 100 of Fig. 1 comprises a plurality of elongated rails, beams or bars 110, a plurality of mounting brackets 120 and a plurality of connection elements 130. Each depicted connection element 130 has two power outlets configured to be connected to a respective vehicle to be charged. The depicted modular charging arrangement 100 of Fig. 1 further comprises an end connection element 140 and a plurality of blind connection elements 150. The modular charging arrangement 100 is connected to a power module 600 via the end connection element 140. The power module 600 may include a central control unit configured to distribute power to power outlets of the connection elements 130. The modular charging arrangement 100 is supported by a plurality of posts 200 via the mounting brackets 120 thereof. Each element, component or module of the modular charging arrangement 100 will be described in greater detail hereinafter.

As illustrated in Fig. 1, the posts 200 are erected form the ground. To this end, the posts 200 may for example be dug into the ground or fastened to a foundation such as a concrete plinth. Each mounting bracket 120 of Fig. 1 is attached to a respective post 200. Alternatively, one or more mounting brackets 120 may be attached to a wall or any other suitable object.

Now turning also to Fig. 2. In Fig. 2 it is depicted how a first elongated rail 110a and a second elongated rail 110b are provided on mounting brackets 120 supported by a respective post 200. A connection element 130 comprising two power outlets 133 is depicted above the first elongated rail 110a and the second elongated rail 110b. More specifically, the connection element 130 is provided over the mounting bracket 120 supporting both the first elongated rail 110a and the second elongated rail 110b.

The first elongated rail 110a comprises a first rail connector 111 and a second rail connector 112 electrically connected via at least one conductor. In practice, the first and the second rail connectors 112 may be connected by a plurality of conductors serving different purposes. As illustrated in Fig. 2, the first rail connector 111 is provided at a first end portion of the first elongated rail 110a and the second rail connector 112 is provided at a second end portion of the first elongated rail 110a.

Correspondingly, the second elongated rail 110b comprises a first rail connector 111 and a second rail connector 112 electrically connected via at least one conductor. As illustrated in Fig. 2, the first rail connector 111 is provided at a first end portion of the second elongated rail 110b and the second rail connector 112 is provided at a second end portion of the second elongated rail 110b. In practice, the first elongated rail 110a and the second elongated rail 110b may have the same design. That is, the first elongated rail 110a and the second elongated rail 110b may in practice be interchangeable with each other.

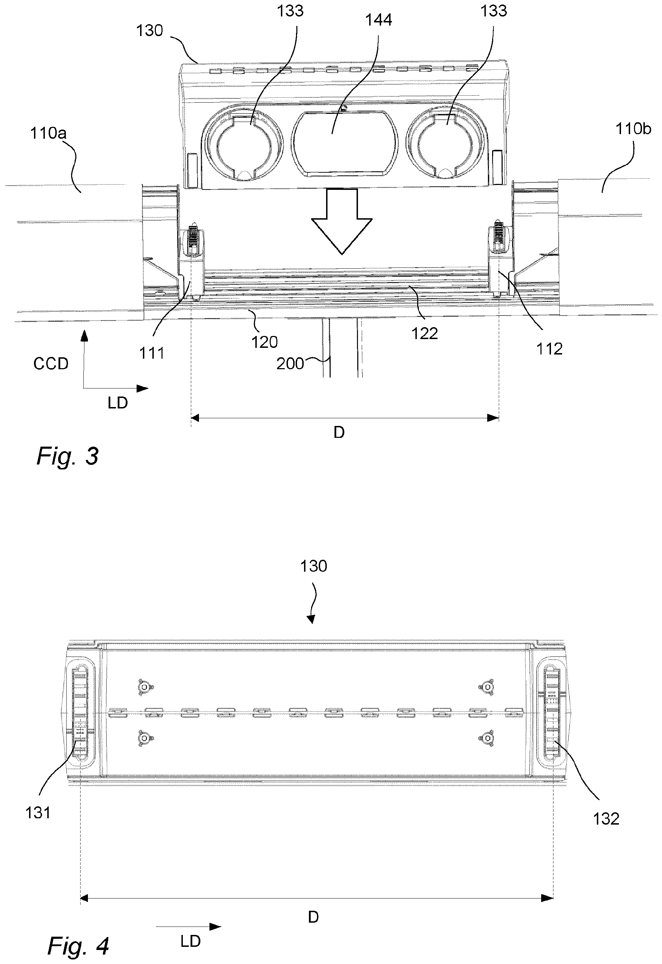

The first and the second rail connectors 111, 112 of the first elongated rail 110a are facing in a common direction being perpendicular to a longitudinal direction LD of the first elongated rail 110a, as illustrated in Fig. 3.

Correspondingly, the first and the second rail connectors 111, 112 of the second elongated rail 110b are facing in the common direction being perpendicular to the longitudinal direction LD of the first elongated rail 110a, and being perpendicular to the longitudinal direction LD of the second elongated rail 11 0b, as illustrated in Fig. 3.

Now turning also to Fig. 3. In Fig. 3 it is depicted in greater detail how the end portion of the first elongated rail 110a and the end portion of the second elongated rail 110b are provided on the central mounting bracket 120 of Fig. 2.

As clearly illustrated in Fig. 3, the first rail connector 111 of the first elongated rail 110a and the second rail connector 112 of the second elongated rail 110b are both facing in the common direction being perpendicular to the longitudinal direction LD of the first and the second elongated rails 110a, 110b. The common direction in which the first rail connector 111 of the first elongated rail 110a and the second rail connector 112 of the second elongated rail 110b are facing is thus a normal direction to the longitudinal direction LD of the first and the second elongated rails 110a, 110b.

The depicted mounting bracket 120 of Fig. 3 comprises a mounting surface 122. The mounting surface 122 is configured to secure the first rail connector 111 of the first elongated rail 110a. The mounting surface 122 is configured to secure the second rail connector 112 of the second elongated rail 110b. More specifically, the mounting surface 122 is configured to secure the first rail connector 111 of the first elongated rail 110a and to secure the second rail connector 112 of the second elongated rail 110b such that the first rail connector 111 of the first elongated rail 110a and the second rail connector 112 of the second elongated rail 110b are arranged at a connection distance D from each other and faces away from the mounting surface 122 in a common connection direction CCD.

The mounting bracket 120 may be extruded from aluminum or may be molded from plastic to give a few non limiting examples.

Now also turning to Fig. 4. In Fig. 4 an underside of the connection element 130 of Fig. 3 is depicted. That is the side of the connection element 130 of Fig. 3 which faces the mounting surface 122 in Fig. 3 is depicted in Fig. 4. As illustrated in Fig. 4, the connection element 130 comprises a first connection element connector 131 and a second connection element connector 132. The first connection element connector 131 and the second connection element connector 132 are electrically connected to the power outlets 133 of the connection element 130.

As illustrated in Fig. 4, the first connection element connector 131 and the second connection element connector 132 are arranged at the connection distance D from each other. The first connection element connector 131 and the second connection element connector 132 are typically fixed at the connection distance D. Further, as illustrated in Fig. 4, the first connection element connector 131 and the second connection element connector 132 face in a common direction. In practice, the first connection element connector 131 and the second connection element connector 132 are both facing away from the underside of the connection element 130.

By the above arrangement of the first rail connector 111 of the first elongated rail 110a, the second rail connector 112 of the second elongated rail 11 0b, the first and a second connection element connectors 131, 132 of the connection element 130, the first connection element connector 131 engages the first rail connector 111 of the first elongated rail 110a and the second connection element connector 132 engages the second rail connector 112 of the second elongated rail 110b when the connection element 130 is translated towards the mounting surface 122 of the mounting bracket 120 in a direction opposite to the common connection direction CCD. The above translation of the connection element 130 towards the mounting surface 122 of the mounting bracket 120 in the direction opposite to the common connection direction CCD is generally indicated by an arrow below the connection element 130 in Fig. 3.

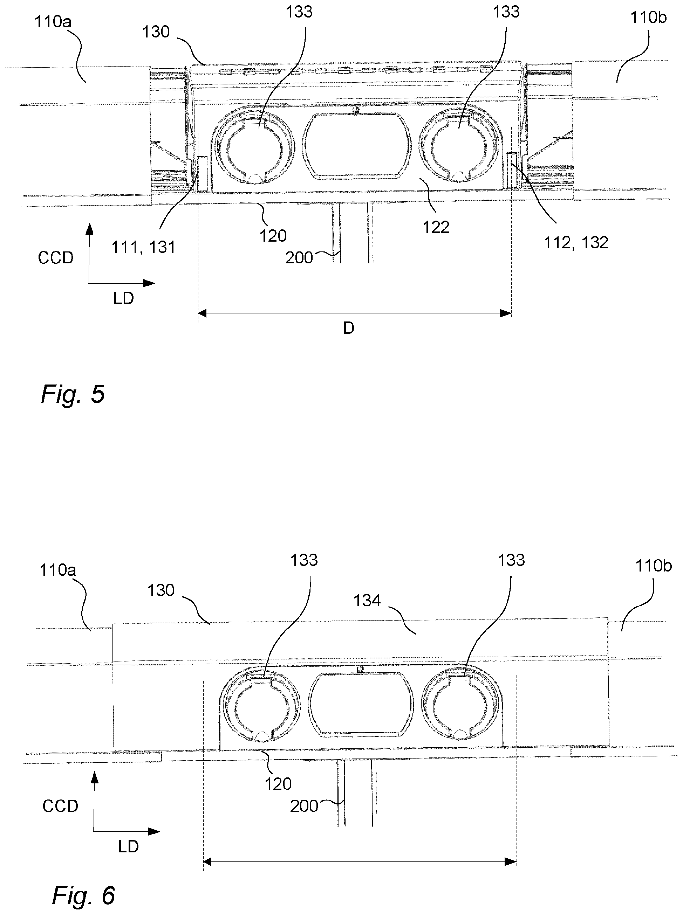

Now also turning to Fig. 5. Thus, by translating the connection element 130 towards the mounting surface 122 of the mounting bracket 120 in the direction opposite to the common connection direction CCD the first connection element connector 131 engages the first rail connector 111 of the first elongated rail 110a so as to establish an electrical contact therebetween, as illustrated in Fig. 5. Correspondingly, by translating the connection element 130 towards the mounting surface 122 of the mounting bracket 120 in the direction opposite to the common connection direction CCD the second connection element connector 132 engages the second rail connector 112 of the second elongated rail 110b so as to establish an electrical contact therebetween, as illustrated in Fig. 5.

To this end, the first connection element connector 131 and the second connection element connector 132 may be provided with a relatively speaking small slack such that the first connection element connector 131 and the second connection element connector 132 may be rotated or translated slightly in relation to the connection element 130. Similarly, the first rail connector 111 and the second rail connector 112 may be provided with a relatively speaking small slack such that the first rail connector 111 and the second rail connector 112 may be rotated or translated slightly in relation to their associated elongated rails 110a, 110b. In this way undesired stresses between the connectors 111, 131 and 112, 132 may be prevented or counteracted. Also, it might be easier to establish said electrical contact between the connectors 111, 131 and 112, 132 in case the first elongated rail 110a and the second elongated rail 110b are not perfectly aligned.

Now also turning to Fig. 6. Fig. 6 illustrates how a protective housing or shield 134 has been attached to over the connection element 130 of Fig. 5. In this way, the rail connectors 111, 112 and the connection element connectors 131, 132 may be protected from tampering and weather. The protective housing or shield 134 may be extruded from aluminum or molded from plastic to give a few non-limiting examples.

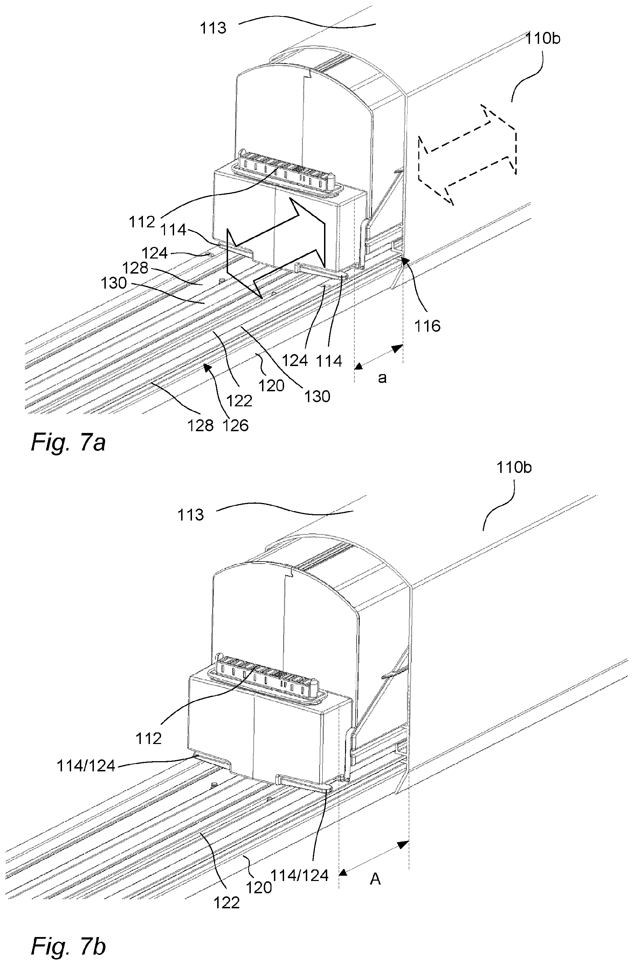

Now also turning to Figs 7a and 7b. Fig. 7a and 7b schematically illustrate how the second end portion of the second elongated rail 110b is supported by the mounting bracket 120. As illustrated in Fig. 7a, the second end portion of the second elongated rail 110b may be slidable along the mounting surface 122 as generally indicated by the hatched arrow in Fig. 7a. This means the connection distance D, as illustrated e.g. in Fig. 3 may be obtainable by translating the first end portion of the second elongated rail 110b along the mounting surface 122. It is to be noted that the above is equally valid for the first end portion of the first elongated 110a. Thus, the first end portion of the first elongated 110a may be slidable along the mounting surface 122 such that the connection distance D is obtainable by translating the first end portion of the first elongated rail 110a along the mounting surface 122.

Further, as also illustrated in Fig. 7a, the second rail 112 connector of the second elongated rail 110b may be slidable in relation to the second elongated rail 110b along the longitudinal direction of the second elongated rail 110b, as generally indicated by the solid line arrow in Fig. 7a. This means the connection distance D, as illustrated e.g. in Fig. 3 may be obtainable by translating the first end portion of the second elongated rail 110b along the second elongated rail 110b. More specifically, the second rail 112 connector of the second elongated rail 110b may be protruded or extended out of the second elongated rail 110b as illustrated in Figs. 7a and 7b by the distances a and A. As clearly illustrated, in Fig. 7b the second rail 112 connector has been more extended out of the second elongated rail 110b as compared to in Fig. 7a. That is, the distance A between the second elongated rail 110b and the second rail 112 connector in Fig. 7b is larger than the distance a between the second elongated rail 110b and the second rail 112 connector in Fig. 7a.

As, understood form the above description, it is important the that the first rail connector 111 of the first elongated rail 110a and the second rail connector 112 of the second elongated rail 110b are arranged at the connection distance D from each other in order to be able to establish an electrical contact therebetween. To this end, the first and the second rail connectors 111, 112 may comprise a locking member 114 configured to cooperate with a locking feature 124 of the mounting surface 122, as illustrated for the second elongated rail 110a in Figs. 7a and 7b. As best seen in Fig. 7a, the locking member 114 may be formed of a pair of snap lock features 114 configured to snap into a locking feature 124 in the form of a pair of holes 124. It is to be understood that any type of suitable locking member 114 and locking feature 124 may be used to advantage. Apart from a snap lock, a screw, a rivet, pin or similar may be used.

As illustrated in Fig. 7a, the mounting surface 122 may be provided with a connection configuration 126 for a mortise and tenon type joint. The connection configuration 126 may comprise a slot 128 of mortise type and/or a projection 130 of tenon type. Further, as illustrated in Fig. 7a the slot 128 and/or projection 130 may have a straight extension along the mounting surface 122. The connection configuration 126 may comprise more than one slot 128 and more than one projection 130 as illustrated in Fig. 7a.

Further, a surface of an end portion of the first elongated rail 110a may comprise a rail connection configuration 116 which is at least partially complementary to the connection configuration 126 of the mounting surface 122. Correspondingly, a surface of the second end portion of the second elongated rail 110b may comprise the rail connection configuration 116 as illustrated in Fig. 7a.

By the above arrangement of the connection configuration 126 and the rail connection configuration 116, the first and second elongated rails 110a, 110b may be slid along the mounting surface in the longitudinal direction LD of the first and second elongated rails 110a, 110b. At the same time, the first and second elongated rails 110a, 110b may be prevented or counteracted from being moved in any other directions with respect to the mounting surface 122. More specifically, the first and second elongated rails 110a, 110b may be prevented or counteracted from being lifted of the mounting surface 122 or from being translated in any transverse directions. To sum up, the first and second elongated rails 110a, 110b may only be translated along their longitudinal directions LD along the mounting surface 122.

As illustrated in e.g. Figs. 2 and 7a, the first and the second elongated rail 110a, 110b may comprise a hollow main body 113. That is, the first and the second elongated rail 110a, 110b may mainly be formed of the hollow main body 113. The hollow main body 113 may house the at least one conductor and hold the first and the second rail connector 111, 112. Thus, the at least one conductor (not shown) may in this way be protected from weather and tapering. Further, the hollow main body 113 may to advantage be formed in a single piece. The hollow main body 113 may to advantage be extruded from aluminum. Other suitable materials and manufacturing techniques may, however, be used. Such extruded main body 113 may thus be relatively speaking strong and may support itself and any other part of the first and the second elongated rail 110a, 110b.

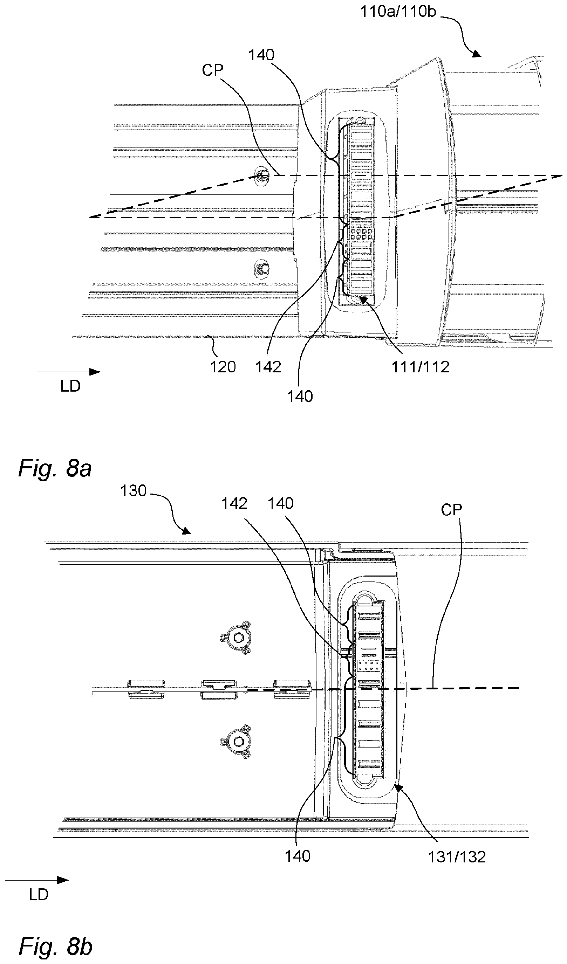

Now turning to Figs. 8a and 8b. Fig. 8a illustrates a rail connector 111, 112 from above. As illustrated in Fig. 8a, the rail connector 111, 112 has a symmetric design with respect to a central plane CP or center line thereof. The central plane CP is indicated by hatched lines in Fig. 8a and being parallel to the longitudinal direction LD of the elongated rail 110a, 110b and parallel to the common direction in which the rail connector 111, 112 faces.

Fig. 8b illustrates a connection element connector 131, 132 from above. As illustrated in Fig. 8b, the connection element connector 131, 132 has a symmetric design with respect to a central plane CP or center line thereof. The central plane CP is indicated by a hatched line in Fig. 8b and is parallel to a longitudinal direction LD of the connection element 130 and parallel to the common direction in which the connection element connector 131, 132 faces.

As illustrated in Figs. 8a and 8b, the connectors 111, 112, 131, 132 have a symmetric overall design or perimeter design with respect to the respective central planes CP but their respective contact configurations may not be symmetric with respect to the respective central planes CP. However, by the design of the depicted connectors 111, 112, 131, 132, the connection element 130 may be rotated 180 degrees and still connected to a pair elongated rails 110a, 11 0b. In this way, the direction in which the power outlets 133 of e.g. Fig. 3 faces may easily be altered.

As illustrated in Figs. 8a and 8b, the rail connector 111, 112 and the connection element connector 131, 132 may comprise a power contact configuration 140. The power contact configuration may be configured to provide power to the power outlets 133. To this end, each of the contact pins/slots of the power contact configuration may for instance be configured to provide a maximum current of 63A at a voltage of 240V per connector. It is however to be understood that other currents and voltages may be provided for. The provided voltage may be AC or may be DC. In practice, power may typically be provided to the power outlets according to industry standard.

As illustrated in Figs. 8a and 8b, the rail connector 111, 112 and the connection element connector 131, 132 may comprise a data contact configuration 142. The data contact configuration 142 may be configured to provide data to a control unit 144 (schematically indicated in Fig. 3) arranged in the connection element 130. The control unit 144 may in turn be configured to control the amount of power transmitted to the power outlets 133. In this way the control unit 144 may communicate with other control units in other connection elements 130 of the modular charging arrangement 100, or with a central control unit. As a result, the power available to the modular charging arrangement 100 may be distributed to vehicles being charged in an efficient manner while mitigating the risk of overloading the power grid. At the same time, vehicles may be charged on a need basis, for instance meaning that a vehicle that is to leave soon may be charged while a vehicle that is to stay for a longer period of time will be charged later. Further, energy prices may be taken into account. The data contact configuration 142 may include low voltage connectors, such as 24V or 12 V connectors, for powering the control unit 144.

Now returning to Fig. 1. As previously indicated, the modular charging arrangement 100 of Fig. 1 is connected to a power module 600. The power module 600 is typically connected to the electrical grid in the location where the modular charging arrangement 100 is located. However, the power module 600 may also be or include a standalone power source such as a battery or UPS. The power module 600 may, as schematically illustrated in Fig. 1 be configured to provide power to the power outlets 133 of the modular charging arrangement 100. To this end, when power is to be supplied to the power outlets illustrated in e.g. Figs. 3 and 5, the power module 600 may be configured to be connected to the second rail connector 112 of the first elongated rail 110a In this way, power may be conveyed by the conductors of the first elongated rail 110a to the first rail connector 111 thereof and further to the power outlet 133 via the connection element connector 131.

In case of a large parking with a large number of parking lots 500, more than one power module 600 may be used to advantage. In this way more power may become available to the modular changing arrangement 100.

The power module 600 may comprise a central control unit. The central control unit of the power module 600 may be configured to distribute power between power outlets 133 of the modular charging arrangement 100. The central control unit may typically be configured to communicate with a respective control unit 144 of a plurality of connection elements 130. In this way, power may be distributed between the plurality of connection elements 130. More importantly, the power available to the modular charging arrangement 100 via the power module 600 may be distributed between the power outlets 133 of the modular charging arrangement 100 in a desired manner. Further, the central control unit may for instance be configured to communicate with a remote server and/or with the internet. In this way, the central control unit may for instance distribute power to the power outlets 133 at times when electricity prices are favorable. Further, in this way, the central control unit may report incidents such as malfunctions of the modular charging arrangement 100.

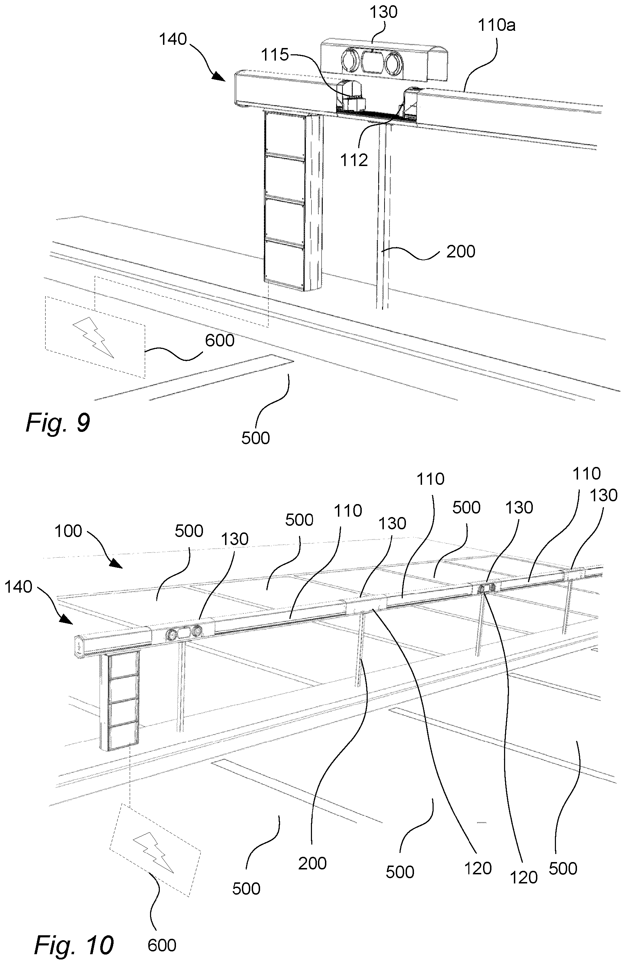

Now turning to Fig. 9. In Fig. 9, the end connection element 140 as introduced in conjunction with Fig. 1 is illustrated in greater detail. The end connection element 140 may as illustrated in Fig. 9 comprise a further connection element connector 115 connected to the power module 600. The depicted further connection element connector 115 is configured to engage the second rail connector 112 of the first elongated rail 110a as illustrated in Fig. 9. In this way, power may be provided to each and every power outlet 133 of the modular charging arrangement.

As is to be understood, the further connection element connector 115 may equally well engage the first rail connector 111 of the second elongated rail 110b such that power is provided to each and every power outlet 133.

Now returning to Fig. 1 again. As previously indicated, the modular charging arrangement 100 of Fig. 1 comprises a plurality of blind connection elements 150. The blind connection elements 150 are provided to connect two elongated rails 110 to each other in a location where no power outlets 133 are needed. As illustrated in e.g. Figs. 1 and 2, each parking lot 500 has its own associated power outlet 133. In other words, a power outlet 133 is provided for each parking lot 500 although blind connection elements 150 are used in the modular charging arrangement of Fig. 1.

In order to connect two elongated rails 110, 11 0a, 110b to each other by means of a blind connection element 150, the blind connection element 150 may in practice comprise a first and a second blind connection element connector electrically connected via at least one conductor. In practice the required number of connectors will be used. The first blind connection element connector and the second blind connection element connector of the blind connection element 150 may in practice be arranged at the connection distance D from each other and may face in a common direction. Further, the first blind connection element connector and the second blind connection element connector may in practice be a connection element connector 131, 132. Thus, the blind connection element 150 may be used to connect two elongated rails 110, 110a, 110b in a corresponding manner to what have been described above in relation to the connection element 130. This means that a blind connection element 150 may be replaced by a connection element 130 or vice versa.

Now turning to Fig. 10. Fig. 10 illustrates a modular charging arrangement 100 similar to the modular charging arrangement 100 of Fig. 1. Thus, in the following only differences between the respective modular charging arrangements 100 will be described to avoid undue repetition. As illustrated in Fig. 10, parking lots 500 are provided on opposite sides of the modular charging arrangement 100 such that vehicles may be parked on opposite sides of the modular charging arrangement while being charged. To this end, the modular charging arrangement 100 of Fig. 10 does not comprise any blind connection elements 150. Instead, connection elements 130 are provided at each mounting bracket 120 to connect a pair of elongated rails 110, 110a, 110b. As illustrated in Fig. 10, every other connection element 130 faces in one direction whereas the remaining connection elements 130 faces in the opposite direction. In this way, a power outlet may be provided for and associated to each and every parking lot 500.

Given the similar design of the connection element 130 and the blind connection element 150, the modular charging arrangement of Fig. 1 may easily be converted into the modular charging arrangement of Fig. 10 by replacing the blind connection elements 150 with connection elements 130.

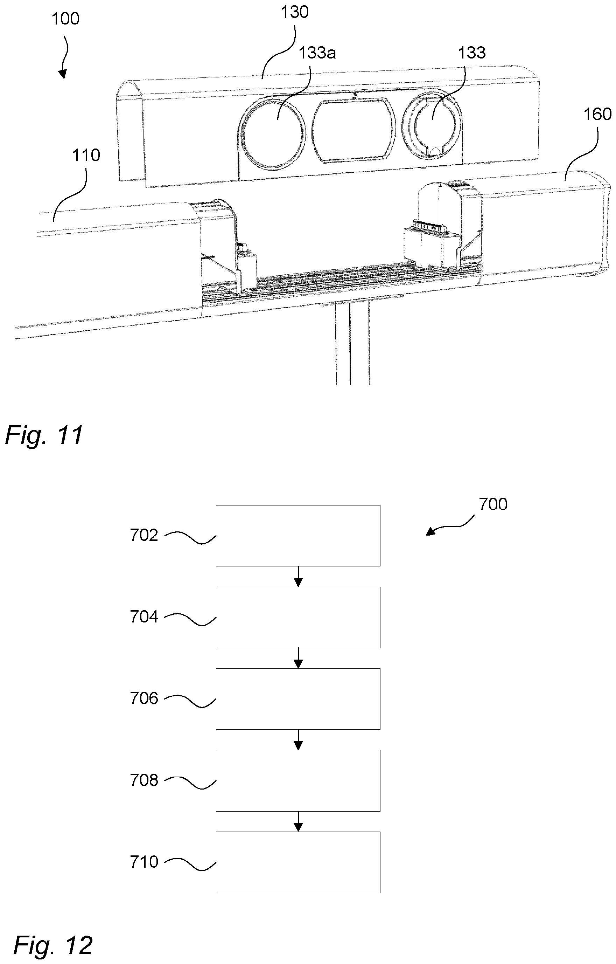

Now turning to Fig. 11. In Fig. 11, illustrates how the modular charging arrangement of Fig. 1 may be terminated with an end element 160. In connection to the end element 160, a connection element 130 comprising a single power 133 may be used while still providing a power outlet 133 for each parking lot 500 at the modular charging arrangement for instance of Fig. 1. In practice, a connection module 130 of the above-described type may be used in which a power outlet 133 has been replaced by a blind plug 133a.

Now turning to Fig. 12. A method 700 of mounting a modular charging arrangement 100 for charging a vehicle will be described.

The method 700 starts by providing 702 a first and a second elongated rail 110a, 110b each comprising a first and a second rail connector 111, 112 connected via at least one conductor, wherein the first rail connector 111 is provided at a first end portion of the elongated rail 110a, 110b and the second rail connector 112 is provided at a second end portion of the elongated rail 110a, 110b, wherein the first and the second rail connectors 111, 112 are facing in a common direction being perpendicular to a longitudinal direction LD of the elongated rail 110a, 110b.

The method 700 proceeds by providing 702 a mounting bracket 120 comprising a mounting surface 122.

The method 700 proceeds by providing 704 a connection element 130 comprising a power outlet 133 configured to be connected to a vehicle to be charged, and a first and a second connection element connector 131, 132 electrically connected to the power outlet 133, wherein the first connection element connector 131 and the second connection element connector 132 are arranged at a connection distance D from each other and faces in a common direction.

The method 700 proceeds by attaching 706 the mounting bracket (120) to an object, such as a post or a wall.

The method 700 proceeds by securing 708 the first rail connector 111 of the first elongated rail 110a and the second rail connector 112 of the second elongated rail 110b at the mounting surface 122 such that the first rail connector 111 of the first elongated rail 110a and the second rail connector 112 of the second elongated rail 110b are arranged at the connection distance D from each other and faces away from the mounting surface 122 in a common connection direction CCD.

The method 700 proceeds by translating 710 the connection element 130 towards the mounting surface 122 of the mounting bracket 120 in a direction opposite to the common connection direction CCD, such that the first connection element connector 131 engages the first rail connector 111 of the first elongated rail 110a and the second connection element connector 112 engages the second rail connector 132 of the second elongated rail 110b.

The person skilled in the art realizes that the present invention by no means is limited to the variants described above. On the contrary, many modifications and variations are possible within the scope of the appended claims.

For instance, the skilled person realizes that numerous variations or layouts of the modular charging arrangement may be realized by utilizing the elements or modules described above.

Further, the elongated rails may be provided in any suitable length. By utilizing longer elongated rails, wider parking lots may be served. Also, by using longer elongated rails, the need for blind connection elements may be reduced or eliminated.

Furthermore, the acts of the method may be performed in any suitable order whenever applicable.

## Claims

1. A modular charging arrangement (100) for charging a vehicle, the charging arrangement (100) comprising:
a first and a second elongated rail (110a, 110b) each comprising a first and a second rail connector (111, 112) electrically connected via at least one conductor, wherein the first rail connector (111) is provided at a first end portion of the elongated rail (110a, 110b) and the second rail connector (112) is provided at a second end portion of the elongated rail (110a, 110b), wherein the first and the second rail connectors (111, 112) are facing in a common direction being perpendicular to a longitudinal direction (LD) of the elongated rail (110a, 110b),
a mounting bracket (120) configured to be attached to an object, such as a post (200) or a wall, the mounting bracket (120) comprising a mounting surface (122) configured to secure the first rail connector (111) of the first elongated rail (110a) and to secure the second rail connector (112) of the second elongated rail (110b) such that the first rail connector (111) of the first elongated rail (110a) and the second rail connector (112) of the second elongated rail (110b) are arranged at a connection distance (D) from each other and faces away from the mounting surface (122) in a common connection direction (CCD),
a connection element (130) comprising a power outlet (133) configured to be connected to a vehicle to be charged, and a first and a second connection element connector (131, 132) electrically connected to the power outlet (133), wherein the first connection element connector (131) and the second connection element connector (132) are arranged at the connection distance (D) from each other and faces in a common direction, such that the first connection element connector (131) engages the first rail connector (111) of the first elongated rail (110a) and the second connection element connector (132) engages the second rail connector (112) of the second elongated rail (110b) when the connection element (130) is translated towards the mounting surface (122) of the mounting bracket (120) in a direction opposite to the common connection direction (CCD).

2. The modular charging arrangement (100) according to claim 1, wherein the first end portion of the first elongated rail (110a) is slidable along the mounting surface (122) and/or wherein the second end portion of the second elongated rail (110b) is slidable along the mounting surface (122) such that the connection distance (D) is obtainable by translating the first end portion of the first elongated rail (110a) along the mounting surface (122) and/or by translating the second end portion of the second elongated rail (110b) along the mounting surface (122).

3. The modular charging arrangement (100) according to claim 1 or 2, wherein the first rail connector (111) of the first elongated rail (110a) is slidable in relation to the first elongated rail (110a) along the longitudinal direction (LD) of the first elongated rail (110a) and/or wherein the second rail connector (112) of the second elongated rail (110b) is slidable in relation to the second elongated rail (110b) along the longitudinal direction (LD) of the second elongated rail (110b).

4. The modular charging arrangement (100) according to any one of the preceding claims, wherein the first rail connector (111) of the first elongated rail (110a) comprises a locking member (114) configured to cooperate with a locking feature (124) of the mounting surface (122) and/or wherein the second rail connector (112) of the second elongated rail (110b) comprises a locking member (114) configured to cooperate with a locking feature (124) of the mounting surface (122).

5. The modular charging arrangement (100) according to any one of the preceding claims, wherein the mounting surface (122) is provided with a connection configuration (126) for a mortise and tenon type joint comprising a slot (128) of mortise type and/or a projection (130) of tenon type, wherein the slot (128) and/or projection (130) has a straight extension along the mounting surface (122).

6. The modular charging arrangement according to claim 5, wherein a surface of the first end portion of the first elongated rail (110a) comprises a rail connection configuration (116) which is at least partially complementary to the connection configuration (126) of the mounting surface (122) and/or wherein a surface of the second end portion of the second elongated rail (110b) comprises the rail connection configuration (116).

7. The modular charging arrangement (100) according to any one of the preceding claims, wherein the first and/or the second elongated rail (110a, 110b) comprising a hollow main body (113) housing the at least one conductor and holding the first and the second rail connector (111, 112), wherein the hollow main body (113) is formed in a single piece.

8. The modular charging arrangement (100) according to any one of the preceding claims, wherein each rail connector (111, 112) has a symmetric design with respect to a central plane (CP) thereof being parallel to the longitudinal direction (LD) of the elongated rail (110a, 110b) and parallel to the common direction in which the rail connector (111, 112) faces.

9. The modular charging arrangement (100) according to any one of the preceding claims, wherein each connection element connector (131, 132) has a symmetric design with respect to a central plane (CP) thereof being parallel to a longitudinal direction (LD) of the connection element 130 and parallel to the common direction in which the connection element connector (131, 132) faces.

10. The modular charging arrangement (100) according to any one of the preceding claims, wherein the rail connector (111, 112) and the connection element connector (131, 132) comprise a power contact configuration (140) configured to provide power to the power outlet (133).

11. The modular charging arrangement (100) according to any one of the preceding claims, wherein the rail connector (111, 112) and the connection element connector (131, 132) comprise a data contact configuration (142) configured to provide data to a control unit (144) arranged in the connection element (130) and configured to control an amount of power transmitted to the power outlet (133).

12. The modular charging arrangement (100) according to any one of the preceding claims, further comprising a power module (600), configured to be connected to the second rail connector (112) of the first elongated rail (110a) or to the first rail connector (111) of the second elongated rail (110b) such that power is provided to the power outlet (133).

13. The modular charging arrangement according to claim 12, further comprising an end connection element (140) comprising a further connection element connector (115) connected to the power module (600), wherein the further connection element connector (115) is configured to engage the second rail connector (112) of the first elongated rail (110a) or to engage the first rail connector (111) of the second elongated rail (110b) such that power is provided to the power outlet (133).

14. The modular charging arrangement (100) according to any one of the preceding claims, further comprising a blind connection element (150) comprising a first and a second blind connection element connector electrically connected via at least one conductor, wherein the first blind connection element connector and the second blind connection element connector are arranged at the connection distance (D) from each other and faces in a common direction, and wherein the first blind connection element connector is a connection element connector (131, 132) and the second blind connection element connector is a connection element connector (131, 132).

15. The modular charging arrangement according to any one of the preceding claims, wherein the modular charging arrangement comprises a plurality of elongated rails, a plurality of mounting brackets and a plurality of connection elements.

16. A method (700) of mounting a modular charging arrangement (100) for charging a vehicle, the method (700) comprising:
providing (702) a first and a second elongated rail (110a, 110b) each comprising a first and a second rail connector (111, 112) connected via at least one conductor, wherein the first rail connector (111) is provided at a first end portion of the elongated rail (110a, 110b) and the second rail connector (112) is provided at a second end portion of the elongated rail (110a, 110b), wherein the first and the second rail connectors (111, 112) are facing in a common direction being perpendicular to a longitudinal direction (LD) of the elongated rail (110a, 110b),
providing (702) a mounting bracket (120) comprising a mounting surface (122),
providing (704) a connection element (130) comprising a power outlet (133) configured to be connected to a vehicle to be charged, and a first and a second connection element connector (131, 132) electrically connected to the power outlet (133), wherein the first connection element connector (131) and the second connection element connector (132) are arranged at a connection distance (D) from each other and faces in a common direction,
attaching (706) the mounting bracket (120) to an object, such as a post or a wall,
securing (708) the first rail connector (111) of the first elongated rail (110a) and the second rail connector (112) of the second elongated rail (110b) at the mounting surface (122) such that the first rail connector (111) of the first elongated rail (110a) and the second rail connector (112) of the second elongated rail (110b) are arranged at the connection distance (D) from each other and faces away from the mounting surface (122) in a common connection direction (CCD),
translating (710) the connection element (130) towards the mounting surface (122) of the mounting bracket (120) in a direction opposite to the common connection direction (CCD), such that the first connection element connector (131) engages the first rail connector (111) of the first elongated rail (110a) and the second connection element connector (112) engages the second rail connector (132) of the second elongated rail (110b).
